(19) Europäisches Patentamt
European Patent Office
Office européen des brevets

(11) **EP 4 254 537 A1**

(12) **EUROPEAN PATENT APPLICATION**
published in accordance with Art. 153(4) EPC

(43) Date of publication:
**04.10.2023   Bulletin 2023/40**

(21) Application number: **20962931.0**

(22) Date of filing: **27.11.2020**

(51) International Patent Classification (IPC):
**H01M 4/13** (2010.01)        **H01M 4/62** (2006.01)

(52) Cooperative Patent Classification (CPC):
**Y02E 60/10; Y02P 70/50**

(86) International application number:
**PCT/CN2020/132347**

(87) International publication number:
**WO 2022/110041 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Dongguan Amperex Technology
Limited
Dongguan, Guangdong 523808 (CN)**

(72) Inventors:
• **LIU, Xiaoqian
Dongguan, Guangdong 523808 (CN)**
• **WANG, Kefei
Dongguan, Guangdong 523808 (CN)**
• **SU, Yisong
Dongguan, Guangdong 523808 (CN)**

(74) Representative: **Klunker IP
Patentanwälte PartG mbB
Destouchesstraße 68
80796 München (DE)**

(54) **ELECTROCHEMICAL DEVICE AND ELECTRONIC DEVICE**

(57)     This application provides an electrochemical apparatus and an electronic apparatus. The electrochemical apparatus includes an electrode. The electrode includes a current collector. The current collector includes a coated region provided with an active material and an uncoated region provided with no active material. The uncoated region is at least partially provided with an insulation layer. The insulation layer includes a binder and inorganic particles. A swelling rate of the insulation layer is not higher than 8% after the insulation layer is immersed in an electrolyte at 85°C for 24h. In this application, good adhesion can be achieved between the insulation layer and the current collector, to reduce a swelling rate and an internal resistance growth rate of the electrochemical apparatus during cycling, and improve performance of the electrochemical apparatus.

FIG. 1

**Description**

**TECHNICAL FIELD**

This application relates to the field of electrochemical technologies, and specifically, to an electrochemical apparatus and an electronic apparatus.

**BACKGROUND**

Lithium-ion batteries are characterized by high specific energy, a high operating voltage, a low self-discharge rate, a small size, a light weight, and the like, and therefore are widely used in various fields such as electrical energy storage, portable electronic devices, and electric vehicles.

A lithium-ion battery typically includes an electrode and a separator. The electrode includes a positive electrode and a negative electrode. The separator is sandwiched between the positive electrode and the negative electrode. The electrode usually includes a current collector, an active material layer, and an insulation layer. The insulation layer is typically provided in a region provided with no active material layer on a surface of the current collector, so as to improve overall insulation performance of the electrode. The inventors have found through research that, in an existing lithium-ion battery, an insulation layer has a high swelling rate in an electrolyte due to impact of material composition of the insulation layer. Therefore, performance of the lithium-ion battery needs to be improved.

**SUMMARY**

This application is intended to provide an electrochemical apparatus and an electronic apparatus, to reduce a swelling rate of an insulation layer of an electrochemical apparatus in an electrolyte, thereby improving performance of the electrochemical apparatus.

It should be noted that, in the following description, an example in which a lithium-ion battery is used as an electrochemical apparatus is used to explain this application. However, the electrochemical apparatus in this application is not limited to the lithium-ion battery.

Specific technical solutions are as follows:

A first aspect of this application provides an electrochemical apparatus. The electrochemical apparatus includes an electrode. The electrode includes a current collector. The current collector includes a coated region provided with an active material and an uncoated region provided with no active material. The uncoated region is at least partially provided with an insulation layer. The insulation layer includes a binder and inorganic particles. A swelling rate of the insulation layer is not higher than 8% after the insulation layer is immersed in an electrolyte at 85°C for 24h.

In the electrochemical apparatus in this application, a region provided with an active material on a surface of the current collector of the electrode may be referred to as a coated region, and a region provided with no active material on the surface of the current collector is referred to as an uncoated region. The uncoated region is at least partially provided with the insulation layer, and different arrangement manners may be used, for example, including but not limited to: providing the insulation layer on two sides of the electrode in a length direction, providing the insulation layer on a starting end side of the electrode, or providing the insulation layer on a terminating end side of the electrode. The foregoing arrangement manners may be used alone or in combination. The starting end and the terminating end may be a starting end and a terminating end of a winding structure in a lithium-ion battery with the winding structure.

The electrode in this application may include a positive electrode and a negative electrode. The insulation layer may be provided in an uncoated region on a surface of a positive-electrode current collector in the positive electrode, or may be provided in an uncoated region on a surface of a negative-electrode current collector in the negative electrode.

The swelling rate of the insulation layer in this application is not higher than 8% after the insulation layer is immersed in the electrolyte at 85°C for 24h. This indicates that the insulation layer in this application has good resistance to swelling in an electrolyte, thereby reducing a thickness growth rate of a lithium-ion battery, and improving performance of the lithium-ion battery.

In an embodiment of this application, the binder may include at least one of polypropylene, polyacrylate, acrylonitrile multipolymer, or carboxymethyl cellulose salt. The binder is added, so that viscosity of the insulation layer can be improved, thereby improving adhesion between the insulation layer and the current collector.

In an embodiment of this application, the binder may include a polymer formed by polymerization of at least one of monomer acrylonitrile, acrylate, acrylamide, or acrylic ester. Preferably, the binder may include a polymer formed by polymerization of at least one of the monomer acrylonitrile, the acrylate, or the acrylamide.

The binder in this application may be an aqueous binder. Metal ions in the acrylate can replace some hydrogen ions, improving hydrophilicity of the binder and alleviating swelling of the binder in the electrolyte while maintaining relatively high adhesion of the binder. In addition, hydrogen ions can easily acquire electrons to form hydrogen. Therefore, after hydrogen ions are reduced, swelling of the lithium-ion battery caused by excessive hydrogen ions can be further prevented.

In an embodiment of this application, based on total mass of the polymer, a mass percentage of the acrylonitrile is 25% to 70%, a mass percentage of the acrylate is 10% to 60%, a mass percentage of the acrylamide is 10% to 60%, and a mass percentage of the acrylic ester is 0% to 10%. Without being limited to any theory, by controlling the mass percentages of the acrylonitrile, the acrylate, the acrylamide, and the acrylic ester within the foregoing ranges, a binder with desired adhesion can be obtained, thereby improving adhesion between the insulation layer and the current collector.

In an embodiment of this application, a swelling rate of the binder in the electrolyte is 0% to 5%. This indicates that the insulation layer in this application has good resistance to swelling in an electrolyte.

In an embodiment of this application, a weight-average molecular weight of the binder is 100000 to 2000000, preferably, 300000 to 800000. Without being limited to any theory, when the weight-average molecular weight of the binder is excessively large, a thickening effect of the binder is enhanced, leading to excessively high viscosity and poor fluidity of a slurry, which may lead to incomplete coating of an insulation layer slurry. When the weight-average molecular weight of the binder is excessively small, viscosity of a slurry is excessively low, and film forming property of the slurry is poor, also leading to incomplete coating of an insulation layer slurry. Without being limited to any theory, by controlling the weight-average molecular weight of the binder within the foregoing range, the insulation layer slurry forms a film with a uniform thickness on a surface of a substrate of the current collector to form the insulation layer, improving adhesion between the insulation layer and the current collector.

In an embodiment of this application, based on total mass of the insulation layer, a mass percentage of the binder is 2% to 50%, and a mass percentage of the inorganic particles is 50% to 98%. Without being limited to any theory, when the percentage of the binder is excessively low, for example, less than 2%, the insulation layer has poor film forming property, which is not conducive to improvement of a cover rate of the insulation layer. When the percentage of the binder is excessively high, for example, greater than 50%, the binder has high viscosity, intensifying shrinkage of the insulation layer during drying and film forming. However, the substrate (for example, an aluminum foil) of the current collector basically does not shrink. Shrinkage rates of the insulation layer and the substrate vary greatly. As a result, a large area of the insulation layer falls off the substrate of the current collector. The percentages of the binder and the inorganic particles are controlled within the foregoing ranges, thereby helping improve adhesion between the insulation layer and the current collector.

In an embodiment of this application, a cover rate of the insulation layer is not less than 95%. By controlling the cover rate of the insulation layer to be not less than 95%, the electrode can have better insulation performance.

In an embodiment of this application, the inorganic particles include at least one of boehmite, diaspore, aluminum oxide, barium sulfate, calcium sulfate, or calcium silicate, preferably, at least one of boehmite or aluminum oxide. The inorganic particles are added, so that strength and insulation performance of the insulation layer can be improved.

In an embodiment of this application, $D_v99$ of the inorganic particles is 0.01 $\mu$m to 9.9 $\mu$m. $D_v99$ of the inorganic particles is preferably not greater than a thickness of the insulation layer; otherwise, an aluminum foil is likely to be damaged during cold pressing, forming concave and convex points that have a thickness greater than a target thickness of the insulation layer. In this application, $D_v99$ indicates a particle size in volume-based particle size distribution, where particle sizes of 99% of particles are not greater than this particle size.

In an embodiment of this application, a thickness of the insulation layer is 0.02 $\mu$m to 10 $\mu$m. Without being limited to any theory, when the thickness of the insulation layer is excessively small, for example, less than 0.02 $\mu$m, strength of the insulation layer is excessively low, affecting insulation performance. When the thickness of the insulation layer is excessively large, for example, greater than 10 $\mu$m, a relative percentage of an active material in the electrode is reduced, affecting energy density of the lithium-ion battery. By controlling the thickness of the insulation layer within the foregoing range, the insulation layer can have desired strength and insulation performance.

In an embodiment of this application, adhesion between the insulation layer and the current collector is not less than 201 N/m. It can be learned that, in this application, good adhesion is achieved between the insulation layer and the current collector, thereby reducing a thickness growth rate and an internal resistance growth rate of the lithium-ion battery.

In an embodiment of this application, compared with an electrochemical apparatus of the same specifications without the insulation layer and stored at 85°C for 24h or 60°C for 30 days, the electrochemical apparatus stored at 85°C for 24h or 60°C for 30 days satisfies at least one of the following:

(a) a difference between thickness growth rates of the electrochemical apparatuses being within ±8%; or

(b) a difference between internal resistance growth rates of the electrochemical apparatuses being within ±8%. It can be learned that, compared with an existing electrochemical apparatus, the electrochemical apparatus in this application has a lower thickness growth rate, a lower internal resistance growth rate, and better performance.

A preparation method for the binder in this application is not particularly limited. Any preparation method commonly known to persons skilled in the art may be used. For example, the following preparation method may be used.

Distilled water is added to a reactor and stirred. Nitrogen is injected to remove oxygen. At least one of the foregoing components such as the acrylonitrile, the acrylate, the acrylamide, and the acrylic ester is added at different mass ratios. A resulting mixture is heated to approximately 65°C in an inert atmosphere and kept at a constant temperature. Then an initiator is added to initiate a reaction. The process ends after the reaction is performed for approximately 20h.

In this application, an initiator is not particularly limited, provided that monomer polymerization can be initiated. For example, the initiator may be a 20% ammonium persulfate solution. In this application, an amount of distilled water and initiator to be added is not particularly limited, provided that an added monomer can have a polymerization reaction. After the reaction is completed, an alkaline solution may be added to a precipitate formed in the reaction for neutralization, to obtain a pH value of 6.5 to 9. Alternatively, a reaction product may be filtered, washed, dried, crushed, sieved, and the like.

Persons skilled in the art should understand that the electrode in this application may be provided with an active material layer on one surface, or may be provided with an active material layer on each of two surfaces. The insulation layer in this application may be provided on at least one surface of the electrode. For example, the insulation layer may be provided on one surface of the electrode, or may be provided on two surfaces of the electrode.

In the positive electrode in this application, the positive-electrode current collector is not particularly limited, and may be any positive-electrode current collector commonly known in the art, for example, an aluminum foil, an aluminum alloy foil, or a composite current collector. A positive-electrode active material layer includes a positive-electrode active material. The positive-electrode active material is not particularly limited, and any positive-electrode active material commonly known in the art may be used. For example, the positive-electrode active material may include at least one of lithium nickel cobalt manganate (811, 622, 523, 111), lithium nickel cobalt aluminate, lithium iron phosphate, a lithium-rich manganese-based material, lithium cobalt oxide, lithium manganate oxide, lithium iron manganese phosphate, or lithium titanate.

In the negative electrode in this application, the negative-electrode current collector is not particularly limited, and any negative-electrode current collector commonly known in the art may be used, for example, a copper foil, an aluminum foil, an aluminum alloy foil, or a composite current collector. A negative-electrode active material layer includes a negative-electrode active material. The negative-electrode active material is not particularly limited, and any negative-electrode active material commonly known in the art may be used. For example, the negative-electrode active material may include at least one of artificial graphite, natural graphite, carbonaceous mesophase spherule, soft carbon, hard carbon, silicon, silicon carbon, lithium titanate, or the like.

The lithium-ion battery in this application further includes an electrolyte. The electrolyte may be one or more selected from a group consisting of a gel electrolyte, a solid electrolyte, and a liquid electrolyte. The liquid electrolyte includes a lithium salt and a non-aqueous solvent.

In some embodiments of this application, the lithium salt is one or more selected from a group consisting of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, and lithium difluoroborate. For example, $LiPF_6$ may be selected as the lithium salt because $LiPF_6$ can provide high ionic conductivity and improve cycling performance. The non-aqueous solvent may be a carbonate compound, a carboxylate compound, an ether compound, another organic solvent, or a combination thereof. The carbonate compound may be a linear carbonate compound, a cyclic carbonate compound, a fluorocarbonate compound, or a combination thereof.

An instance of the linear carbonate compound is dimethyl carbonate (DMC), diethyl carbonate (DEC), dipropyl carbonate (DPC), methyl propyl carbonate (MPC), ethylene propyl carbonate (EPC), methyl ethyl carbonate (MEC), or a combination thereof. An example of the cyclic carbonate compound is ethylene carbonate (EC), propylene carbonate (PC), butylene carbonate (BC), vinyl ethylene carbonate (VEC), or a combination thereof. An instance of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

An instance of the carboxylate compound is methyl formate, methyl acetate, ethyl acetate, n-propyl acetate, tert-butyl acetate, methyl propionate, ethyl propionate, propyl propionate, $\gamma$-butyrolactone, decanolide, valerolactone, mevalonolactone, caprolactone, or a combination thereof.

An instance of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An instance of the another organic solvent is dimethyl sulfoxide, 1,2-dioxolane, sulfolane, methyl-sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

In the electrochemical apparatus in this application, the positive electrode may include the insulation layer in this application, the negative electrode may include the insulation layer in this application, or both the positive electrode and the negative electrode may include the insulation layer in this application.

A second aspect of this application provides an electronic apparatus including the electrochemical apparatus according to the first aspect.

The electronic apparatus in this application is not particularly limited, and may be any electronic apparatus known in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, a lithium-ion capacitor, and the like.

A process of preparing the electrochemical apparatus is commonly known to persons skilled in the art, and is not particularly limited in this application. For example, the electrochemical apparatus may be prepared in the following process: A positive electrode and a negative electrode are stacked with a separator, and are put into a housing after undergoing operations such as winding and folding as required. An electrolyte is injected into the housing, and the housing is sealed. The separator in use is the foregoing separator provided in this application. In addition, if necessary, an overcurrent prevention element, a guide plate, and the like may be placed in the housing to prevent pressure increase, overcharge, and overdischarge in the electrochemical apparatus.

This application provides an electrochemical apparatus and an electronic apparatus. The electrochemical apparatus includes an electrode. The electrode includes a current collector. The current collector includes a coated region provided with an active material and an uncoated region provided with no active material. The uncoated region is at least partially provided with an insulation layer. The insulation layer includes a binder and inorganic particles. A swelling rate of the insulation layer is not higher than 8% after the insulation layer is immersed in electrolyte at 85°C for 24h, ensuring sufficient adhesion between the insulation layer and the current collector, and thus reducing a swelling rate and an internal resistance growth rate of the electrochemical apparatus during cycling.

## BRIEF DESCRIPTION OF DRAWINGS

To describe the technical solutions in this application and the prior art more clearly, the following briefly describes the accompanying drawings required for describing the embodiments and the prior art. Apparently, the accompanying drawings in the following description show merely some embodiments of this application.

FIG. 1 is a schematic structural diagram of an electrode plate according to an embodiment of this application;

FIG. 2a is a schematic structural diagram of an electrode plate according to another embodiment of this application;

FIG. 2b is a schematic structural diagram of an electrode plate according to still another embodiment of this application;

FIG. 2c is a schematic structural diagram of an electrode plate according to still another embodiment of this application;

FIG. 3 is a schematic structural diagram of an electrode plate according to still another embodiment of this application; and

FIG. 4 is a schematic diagram showing a relationship between adhesion and a stroke in an adhesion test.

Reference signs: 1. active material layer; 2. insulation layer; and 3. current collector.

## DESCRIPTION OF EMBODIMENTS

To make the objectives, technical solutions, and advantages of this application more comprehensible, the following describes this application in detail with reference to accompanying drawings and embodiments. Apparently, the described embodiments are merely some rather than all of the embodiments of this application. All other technical solutions obtained by persons of ordinary skill in the art based on the embodiments of this application fall within the protection scope of this application.

It should be noted that, in the specific embodiments of this application, an example in which a lithium-ion battery is used as an electrochemical apparatus is used to explain this application. However, the electrochemical apparatus in this application is not limited to the lithium-ion battery.

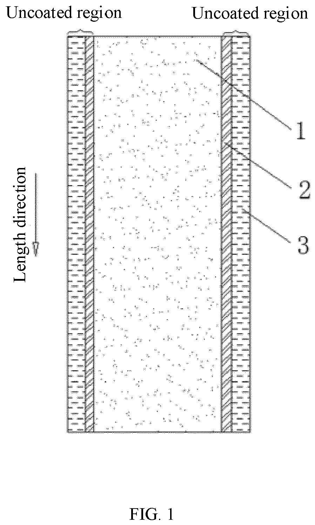

FIG. 1 is a schematic structural diagram (top view) of an electrode plate according to an embodiment of this application. The electrode plate is usually rectangular. As shown in FIG. 1, uncoated regions, that is, regions provided with no active material layer 1, may be provided on two sides of the electrode plate in a length direction. A current collector 3 is exposed from the uncoated regions. In FIG. 1, insulation layers 2 may be provided in the uncoated regions, and specifically, may be provided on the two sides of the electrode plate in the length direction. Certainly, an insulation layer 2 may alternatively be provided only on one side of the electrode in the length direction.

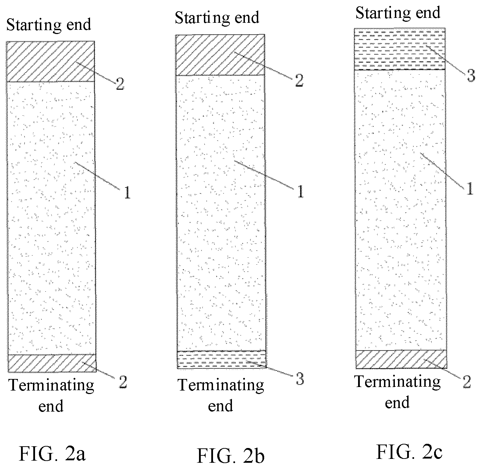

FIG. 2a to FIG. 2c are schematic structural diagrams (top views) of electrode plates according to other three embodiments of this application respectively. Uncoated regions may also be provided at a starting end and a terminating end of the electrode plate. As shown in FIG. 2a, insulation layers 2 may be provided on a starting end side and a terminating end side of the electrode plate. Alternatively, as shown in FIG. 2b or FIG. 2c, an insulation layer 2 may be provided only on one of the starting end side and the terminating end side of the electrode.

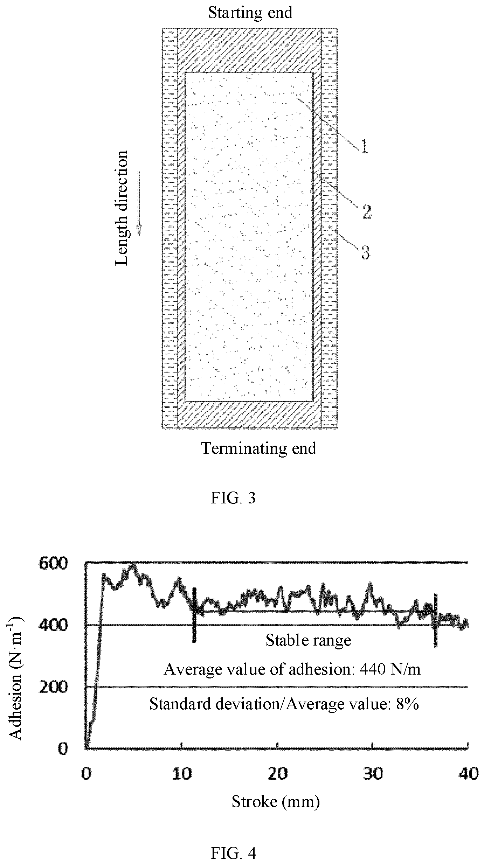

FIG.3 is a schematic structural diagram (top view) of an electrode plate according to still another embodiment of this application. Uncoated regions may be provided on two sides of the electrode plate in a length direction and at a starting end and a terminating end of the electrode plate. As shown in FIG. 3, insulation layers 2 may be provided on the two sides of the positive electrode plate in the length direction and at the starting end and the terminating end of the positive electrode.

FIG. 4 shows a relationship between adhesion and a stroke in an adhesion test.

Examples

The following describes the embodiments of this application more specifically by using examples and comparative examples. Various tests and evaluations were performed according to the following methods. In addition, unless otherwise specified, "portions" and "%" are based on mass.

Test method and device:

**Swelling test for electrode plate:**

(1) In an environment at $(25\pm3)°C$, an electrode plate with an insulation layer was detached from a finished lithium-ion battery. If another coating is provided on another side of the electrode plate, the coating needs to be removed by using a physical or chemical method without damaging a current collector or the insulation layer, to obtain an electrode plate sample.

(2) Thicknesses of at least 10 different points on the current collector of the electrode plate sample were measured by using a ten-thousandth micrometer, and an average value of the thicknesses of all the test points was denoted as T0.

(3) An electrolyte on a surface of the electrode plate sample was removed by using dust-free paper. Then thicknesses of at least 10 different points on the electrode plate sample were measured by using the ten-thousandth micrometer, an average value of the thicknesses of all the test points was denoted as T1.

(4) The electrode plate sample was immersed in dimethyl carbonate (DMC), stored at 85°C for 24h, and then taken out. Then DMC on the surface of the electrode plate sample was removed by using dust-free paper at $(25\pm3)°C$. Thicknesses of 10 different points on the electrode plate sample were measured by using the ten-thousandth micrometer, and an average value of the thicknesses of all the test points was denoted as T2.

(5) A swelling rate E of the electrode plate sample was calculated by using the following formula:

$$E = [(T2 - T0)/(T1 - T0)] \times 100\% - 100\%$$

It is required that an interval between a time at which the electrode plate sample was taken out from the 85°C environment and a time when the thickness test was completed does not exceed 20 min.

**Thickness growth rate and internal resistance growth rate test for lithium-ion battery:**

Storage condition 1: 85°C for 24 h

In an environment at 25±3°C, a lithium-ion battery was charged to a designed full-charge voltage at a constant current of 0.5C, and then charged to 0.025C constantly at the full-charge voltage. An initial thickness of the lithium-ion battery was measured, and was denoted as T0. An initial internal resistance was denoted as IMP0. The lithium-ion battery was put into an 85±3°C high-temperature furnace, and was taken out every 4h (hour). A thickness of the lithium-ion battery was measured each time before a temperature of the lithium-ion battery drops to 80°C. Then thicknesses at 4h, 8h, ..., and 24h were sequentially denoted as T0→4h hot test, T0→8h hot test, ..., and T0→24h hot test. Internal resistances at 4h, 8h, ..., and 24h were sequentially denoted as IMP0→4h hot test, IMP0→8h hot test, ..., and IMP0→24h hot test. After the temperature of the lithium-ion battery drops to an ambient temperature 25±3°C, a thickness of the lithium-ion battery was measured every 4h. Then thicknesses at 4h, 8h, ..., and 24h were sequentially denoted as T0→4h cold test, T0→8h cold test, ..., and T0→24h cold test. An internal resistance of the lithium-ion battery was measured every 4h. Internal resistances at 4h, 8h, ..., and 24h were sequentially denoted as IMP0→4h cold test, IMP0→8h cold test, ..., and IMP0→24h cold test. Each time a thickness of the lithium-ion battery was measured at the ambient temperature, the lithium-ion battery was put into the 85±3°C high-temperature furnace again. After 4h, the lithium-ion battery was taken out again for thickness measurement. This process repeats until 24h elapsed.

Storage condition 2: 60°C for 30 days

In an environment at 25±3°C, a lithium-ion battery was charged to a designed full-charge voltage at a constant current of 0.5C, and then charged to 0.025C constantly at the full-charge voltage. An initial thickness of the lithium-ion battery was measured, and was denoted as T0. An initial internal resistance was denoted as IMP0. The lithium-ion battery was put into a 60±3°C high-temperature furnace, and was taken out every 5d (day). A thickness of the lithium-ion battery was measured each time before a temperature of the lithium-ion battery drops to 55°C. Then thicknesses at 5d, 10d, ..., and 30d were sequentially denoted as T0→5d hot test, T0→10d hot test, ..., and T0→30d hot test. Internal resistances at 5d, 10d, ..., and 30d were sequentially denoted as IMP0→5d hot test, IMP0→10d hot test, ..., and IMP0→30d hot test. After the temperature of the lithium-ion battery drops to an ambient temperature 25±3°C, a thickness of the lithium-ion battery was measured every 5d. Then thicknesses at 5d, 10d, ..., and 30d were sequentially denoted as T0→5d cold test, T0→10d cold test, ..., and T0→30d cold test. An internal resistance of the lithium-ion battery was measured every 5d. Internal resistances at 5d, 10d, ..., and 30d were sequentially denoted as IMP0→5d cold test, IMP0→10d cold test, ..., and IMP0→30d cold test. Each time a thickness of the lithium-ion battery was measured at the ambient temperature, the lithium-ion battery was put into the 60±3°C high-temperature furnace again. After 5d, the lithium-ion battery was taken out again for thickness measurement. This process repeats until 30d elapsed.

Thickness test for lithium-ion battery

A thickness of a lithium-ion battery was measured by using a PPG battery thickness gauge. Pressure per unit area on the test board was set to 25 kg/m$^2$.
Internal resistance test for a lithium-ion battery:
An alternating-current internal resistance of a lithium-ion battery was measured by using a resistance meter at a sinusoidal 1000 Hz wave.

Thickness growth rate test for lithium-ion battery:

Under the foregoing two storage conditions, a ratio of a hot-test thickness or a cold-test thickness of a lithium-ion battery during storage to an initial thickness of the lithium-ion battery was calculated, and 100% was subtracted from the ratio. For example, a hot-test thickness growth rate at the 4th hour was equal to a hot-test thickness at the 4th hour (namely, T0→4h hot test)/t0 - 100%.

Internal resistance growth rate test for lithium-ion battery:

Under the foregoing two storage conditions, a ratio of a hot-test internal resistance or a cold-test internal resistance a lithium-ion battery during storage to an initial internal resistance of the lithium-ion battery was calculated, and 100% was subtracted from the ratio. For example, a hot-test internal resistance growth rate on the 5th day was equal to a hot-test internal resistance on the 5th day (namely, IMP0→5d hot test)/IMP0 - 100%.

**Weight-average molecular weight test for binder:**

A weight-average molecular weight of a binder in an insulation layer was measured by using the gel permeation chromatography (GPC) method. In this application, the weight-average molecular weight is an average molecular weight based on mass statistics.

**Adhesion test:**

Adhesion between an insulation layer and a current collector was tested by using a Gotech tensile machine and a 90°-angle method. An electrode plate with an insulation layer in a finished lithium-ion battery was cut into strip samples of 20 mm × 60 mm, and lengths and widths of the samples could be adjusted proportionally according to actual situations. In a length direction of the sample, an insulation layer surface at one end of the sample was bonded to a steel plate by using a double-sided adhesive, where a length of the insulation layer surface bonded was not less than 40 mm. Then the steel plate was fastened to a corresponding position of the Gotech tensile machine, another end of the sample that was not bonded to the steel plate was lifted, and the electrode plate sample was clamped into a collet by using a connector or clamped directly into the clip. A spatial included angle between the lifted sample and the steel plate was 90°. The collet pulled the electrode plate at a speed of 5 mm/min so that the insulation layer was separated from the current collector, and a final average tensile force tested in a stable range was denoted as adhesion between the insulation layer and the current collector. As shown in FIG. 4, it is required that a ratio of a standard deviation to an average value of adhesion data in the stable range not exceed 10%.

**Coverage rate test:**

(1) An electrode plate coated with an insulation layer was cut to obtain an electrode plate sample coated with an insulation layer. An area of a surface coated with the insulation layer was denoted as S1.

(2) A current collector area uncoated with an insulating material (that is, an uncoated area) on a surface of the electrode plate sample in (1) that was coated with an insulation layer was measured by using a CCD microscope with a resolution of 0.02 $\mu$m, and the current collector area was denoted as S2.

(3) A cover rate B of the insulation layer was calculated according to the following formula: B = (S1 - S2)/S 1 × 100%.

**$D_v99$ test for inorganic particles:**

$D_v99$ of inorganic particles was tested by using a laser particle size analyzer. $D_v99$ indicates a particle size in volume-based particle size distribution, where particle sizes of 99% of particles are not greater than this particle size.

**Thickness test for insulation layer:**

(1) In an environment at (25±3)°C, an electrode plate coated with an insulation layer was detached from a finished battery cell. An electrolyte remaining on a surface of the electrode plate was removed by using dust-free paper.

(2) The electrode plate coated with the insulation layer underwent plasma cutting, to obtain a cross section of the electrode plate.

(3) The cross section of the electrode plate obtained in (2) was observed by using a SEM, and a thickness of an insulating coating on a single surface was tested, with adjacent test points spaced 2 mm to 3 mm a part. At least 15 different points were tested, and an average value of thicknesses of all the test points was recorded as a thickness of the insulation layer.

**Swelling rate test for binder:**

A dispersant containing a binder was dried at 80°C to form an adhesive film with a thickness of 2 mm to 3 mm. Then the adhesive film was cut to obtain an adhesive film sample with a mass of 1 g to 2 g. A mass of the adhesive film sample before immersion in an electrolyte was weighed and denoted as W1. At 60°C, the adhesive film sample was immersed in an electrolyte for 7 days (a mass ratio of the electrolyte to the adhesive film sample was 50:1, and a mass ratio between components of the electrolyte was as follows: ethylene carbonate:propylene carbonate:diethyl carbonate:ethyl propionate = 30:10:30:30). Then a solvent on a surface of the adhesive film sample was removed, and a mass of the adhesive film sample after swelling was weighed and denoted as W2. A swelling rate △W1 of the adhesive film sample is calculated by using the following formula:

$$\triangle W1 = (W2 - W1)/W1 \times 100\%$$

In the formula, W1 indicates the mass of the adhesive film sample before immersion in the electrolyte, and W2 indicates the mass of the adhesive film sample after immersion in the electrolyte.

To ensure reliability of test results, a plurality of samples with approximately the same thickness may be selected during the test, each sample is measured a plurality of times, for example, three times, and then an average value is calculated.

**Example 1**

<Preparation of positive electrode plate>

<Preparation of binder>

Distilled water was added to a reactor and stirred. Nitrogen was injected to remove oxygen. After 2h, the following monomers were added to the reactor at a mass ratio of 45:45:10: acrylonitrile, sodium acrylate, and acrylamide. A resulting mixture was heated to 65°C in an inert atmosphere and kept at a constant temperature. Then a 20% ammonium persulfate solution was added as an initiator to initiate a reaction. A precipitate was taken out after the reaction was performed for 22h. An alkaline solution was added for neutralization until a pH value was 6.5 to 9. A mass ratio of the distilled water, the monomers, and the initiator was 89.5:10:0.5. After the reaction was completed, a reaction product was filtered, washed, dried, crushed, sieved, and the like to obtain a binder.

<Preparation of insulation layer slurry>

The prepared binder and inorganic particles boehmite were dispersed in deionized water and evenly stirred until the slurry had a stable viscosity, to obtain an insulation layer slurry with a solid content of 30%. A mass ratio of the binder to the inorganic particles was 50:50. A weight-average molecular weight of the binder was 500000. $D_v99$ of the inorganic particles was 3 $\mu$m.

<Preparation of positive electrode plate including insulation layer>

Positive-electrode active materials lithium cobalt oxide (LCO), polyvinylidene fluoride (PVDF), conductive carbon black, and carbon nanotubes were mixed at a mass ratio of 97:1.5:0.8:0.7. Then N-methylpyrrolidone (NMP) was added as a solvent, to prepare a slurry with a solid content of 75%, and the slurry was evenly stirred. The slurry was evenly applied onto a current collector aluminum foil and dried at 90°C to obtain an active material layer with a thickness of 100 $\mu$m.

The prepared insulation layer slurry was applied to a region uncoated with an active material layer on a surface of the aluminum foil to obtain an insulation layer with a thickness of 6 $\mu$m, where a cover rate of the insulation layer was 95%. Inorganic particles accounted for 50% of a total mass of the insulation layer, and a binder accounted for 50% of the total mass of the insulation layer. Then the foregoing steps were repeated on another surface of the positive electrode plate to obtain a positive electrode plate coated with positive-electrode active material layers on both sides. The positive electrode plate was cut into a size of 74 mm × 867 mm, and a tab was welded thereto for later use.

<Preparation of negative electrode plate>

Negative-electrode active materials graphite, styrene-butadiene rubber, and sodium carboxymethyl cellulose were mixed at a weight ratio of 97.5:1.3:1.2. Deionized water was added as a solvent, to prepare a slurry with a solid content of 70%, and the slurry was evenly stirred. The slurry was evenly applied onto a negative-electrode current collector copper foil, dried at 110°C, and cold pressed to obtain a negative electrode plate coated with a negative-electrode active material layer on a single side, where a thickness of the negative-electrode active material layer was

150 μm.

After the foregoing steps were completed, these steps were also completed on a rear side of the negative electrode plate by using the same method, to obtain a negative electrode plate coated on both sides. After the coating was completed, the negative electrode plate was cut into a sheet with a size of 76 mm × 851 mm, and a tab was welded thereto for later use.

<Preparation of electrolyte>

In a dry argon atmosphere, organic solvents ethylene carbonate, ethyl methyl carbonate, and diethyl carbonate were mixed at a mass ratio of EC:EMC:DEC = 30:50:20 to obtain an organic solution. Then lithium salt lithium hexafluorophosphate was added to the organic solvents for dissolution. The mixture was evenly mixed to obtain an electrolyte with a lithium salt concentration of 1.15 mol/L.

<Preparation of separator>

Aluminum oxide and polyacrylate were mixed at a mass ratio of 90:10 and dissolved in deionized water to obtain a ceramic slurry with a solid content of 50%. Then the ceramic slurry was evenly applied onto one side of a porous substrate (a polyethylene substrate with a thickness of 7 μm, an average pore diameter of 0.073 μm, and a porosity of 26%) by using the micro-gravure coating method, and dried to obtain a double-layer structure of a ceramic coating and the porous substrate. A thickness of the ceramic coating was 50 μm.

Polyvinylidene fluoride (PVDF) and polyacrylate were mixed at a mass ratio of 96:4 and dissolved in deionized water to obtain a polymer slurry with a solid content of 50%. Then the polymer slurry was evenly applied onto two surfaces of the double-layer structure of the ceramic coating and the porous substrate by using the micro-gravure coating method, and dried to obtain a separator. A thickness of a single-layer coating formed by the polymer slurry was 2 μm.

<Preparation of lithium-ion battery>

The positive electrode plate, the separator, and the negative electrode plate prepared above were stacked in sequence, so that the separator was sandwiched between the positive and negative electrode plates for separation, and were then wound into an electrode assembly. The electrode assembly was placed into an aluminum-plastic packaging bag, and was dehydrated at 80°C, and the prepared electrolyte was injected. After steps such as vacuum sealing, standing, chemical conversion, and shaping, a lithium-ion battery was obtained.

**Example 2**

This example was the same as Example 1 except that in <preparation of insulation layer slurry>, inorganic particles accounted for 85% of a total mass of an insulation layer, and a binder accounted for 15% of the total mass of the insulation layer; and that in <preparation of positive electrode plate including insulation layer>, a cover rate of the insulation layer was 98%.

**Example 3**

This example was the same as Example 1 except that in <preparation of insulation layer slurry>, inorganic particles accounted for 98% of a total mass of an insulation layer, and a binder accounted for 2% of the total mass of the insulation layer.

**Example 4**

This example was the same as Example 2 except that diaspore was used as inorganic particles in <preparation of insulation layer slurry>.

**Example 5**

This example was the same as Example 2 except that aluminum oxide ($Al_2O_3$) was used as inorganic particles in <preparation of insulation layer slurry>.

**Example 6**

This example was the same as Example 2 except that barium sulfate was used as inorganic particles in <preparation of insulation layer slurry>.

**Example 7**

This example was the same as Example 2 except that polymethyl acrylate was used as a binder in <preparation of insulation layer slurry>.

**Example 8**

This example was the same as Example 2 except that acrylonitrile multipolymer was used as a binder in <preparation of insulation layer slurry>.

**Example 9**

This example was the same as Example 2 except that sodium carboxymethyl cellulose was used as a binder in <preparation of insulation layer slurry>.

**Example 10**

This example was the same as Example 2 except that sodium polyacrylate was used as a binder in <preparation of insulation layer slurry>.

**Example 11**

This example was the same as Example 2 except that polyacrylamide was used as a binder in <preparation of insulation layer slurry>.

**Example 12**

This example was the same as Example 2 except that acrylamide and sodium acrylate at a mass ratio of 40:60 were used as monomers in <preparation of binder>.

**Example 13**

This example was the same as Example 2 except that acrylonitrile and acrylamide at a mass ratio of 40:60 were used as monomers in <preparation of binder>.

**Example 14**

This example was the same as Example 2 except that acrylonitrile and sodium acrylate at a mass ratio of 40:60 were used as monomers in <preparation of binder>.

**Example 15**

This example was the same as Example 2 except that acrylonitrile, sodium acrylate, acrylamide, and acrylate at a mass ratio of 27:60:10:3 were used as monomers in <preparation of binder>.

**Example 16**

This example was the same as Example 2 except that acrylonitrile, sodium acrylate, and acrylamide at a mass ratio of 30:60: 10 were used as monomers in <preparation of binder>.

**Example 17**

This example was the same as Example 2 except that acrylonitrile, sodium acrylate, and acrylamide at a mass ratio of 30:10:60 were used as monomers in <preparation of binder>.

**Example 18**

This example was the same as Example 2 except that acrylonitrile, sodium acrylate, and acrylamide at a mass ratio of 70:10:20 were used as monomers in <preparation of binder>.

**Example 19**

This example was the same as Example 2 except that a weight-average molecular weight of a binder was 100000 in <preparation of binder>.

**Example 20**

This example was the same as Example 2 except that in <preparation of binder>, a weight-average molecular weight of a binder was 1000000; and that in <preparation of positive electrode plate including insulation layer>, a cover rate of the insulation layer was 99%.

**Example 21**

This example was the same as Example 2 except that in <preparation of binder>, a weight-average molecular weight of a binder was 2000000; and that in <preparation of positive electrode plate including insulation layer>, a cover rate of the insulation layer was 99%.

**Example 22**

This example was the same as Example 1 except that acrylamide and sodium acrylate at a mass ratio of 40:60 were used as monomers in <preparation of insulation layer slurry>.

**Example 23**

This example was the same as Example 3 except that acrylamide and sodium acrylate at a mass ratio of 40:60 were used as monomers in <preparation of insulation layer slurry>.

**Example 24**

This example was the same as Example 19 except that acrylamide and sodium acrylate at a mass ratio of 40:60 were used as monomers in <preparation of insulation layer slurry>.

**Example 25**

This example was the same as Example 2 except that in <preparation of insulation layer slurry>, $D_v99$ of inorganic particles was 0.01 $\mu$m; and that in <preparation of positive electrode plate including insulation layer>, a thickness of the insulation layer was 0.02 $\mu$m.

**Example 26**

This example was the same as Example 2 except that in <preparation of insulation layer slurry>, $D_v99$ of inorganic particles was 1.0 $\mu$m; and that in <preparation of positive electrode plate including insulation layer>, a thickness of the insulation layer was 1.0 $\mu$m.

**Example 27**

This example was the same as Example 2 except that in <preparation of insulation layer slurry>, $D_v99$ of inorganic particles was 3.0 $\mu$m; and that in <preparation of positive electrode plate including insulation layer>, a thickness of the insulation layer was 3.5 $\mu$m.

**Example 28**

This example was the same as Example 2 except that in <preparation of insulation layer slurry>, $D_v99$ of inorganic particles was 5.0 $\mu$m; and that in <preparation of positive electrode plate including insulation layer>, a thickness of the insulation layer was 6.0 $\mu$m.

**Example 29**

This example was the same as Example 2 except that in <preparation of insulation layer slurry>, $D_v99$ of inorganic particles was 7.0 $\mu$m; and that in <preparation of positive electrode plate including insulation layer>, a thickness of the insulation layer was 8.0 $\mu$m.

**Example 30**

This example was the same as Example 2 except that in <preparation of insulation layer slurry>, $D_v99$ of inorganic particles was 9.9 $\mu$m; and that in <preparation of positive electrode plate including insulation layer>, a thickness of the insulation layer was 10.0 $\mu$m.

**Example 31**

This example was the same as Example 2 except <preparation of positive electrode plate> and <preparation of negative electrode plate>.

<Preparation of positive electrode plate>

Positive-electrode active materials lithium cobalt oxide (LCO), polyvinylidene fluoride (PVDF), conductive carbon black, and carbon nanotubes were mixed at a mass ratio of 97:1.5:0.8:0.7. Then N-methylpyrrolidone (NMP) was added as a solvent, to prepare a slurry with a solid content of 75%, and the slurry was evenly stirred. The slurry was evenly applied onto a current collector aluminum foil, dried at 90°C, and cold pressed to obtain a positive electrode plate coated with a positive-electrode active material layer on a single side, where a thickness of the positive-electrode active material layer was 100 $\mu$m. Then the foregoing steps were repeated on another surface of the positive electrode plate to obtain a positive electrode plate coated with positive-electrode active material layers on both sides. The positive electrode plate was cut into a size of 74 mm $\times$ 867 mm, and a tab was welded thereto for later use.

<Preparation of negative electrode plate>

An insulation layer slurry was prepared by using the same method in Example 2.

<Preparation of negative electrode plate including insulation layer>

Negative-electrode active materials graphite, styrene-butadiene rubber, and sodium carboxymethyl cellulose were mixed at a weight ratio of 97.5:1.3:1.2. Deionized water was added as a solvent, to prepare a slurry with a solid content of 70%, and the slurry was evenly stirred. The slurry was evenly applied onto a negative-electrode current collector copper foil and dried at 110°C to obtain a negative-electrode active material layer with a thickness of 150 $\mu$m.

The prepared insulation layer slurry was applied to a region uncoated with an active material layer on a surface of the copper foil to obtain an insulation layer with a thickness of 6 $\mu$m. These steps were also completed on a rear side of the negative electrode plate by using the same method, to obtain a negative electrode plate coated on both sides. After the coating was completed, the negative electrode plate was cut into a sheet with a size of 76 mm $\times$ 851 mm, and a tab was welded thereto for later use.

**Example 32**

This example was the same as Example 2 except that both a positive electrode plate and a negative electrode plate were provided with an insulation layer with a thickness of 6 $\mu$m.

**Example 33**

This example was the same as Example 2 except the <preparation of positive electrode plate>.

<Preparation of positive electrode plate including insulation layer>

Positive-electrode active materials lithium iron phosphate, PVDF, conductive carbon black, and carbon nanotubes were mixed at a mass ratio of 96.8:2:0.7:0.5. Then N-methylpyrrolidone (NMP) was added as a solvent, to prepare a slurry A with a solid content of 75%, and the slurry was evenly stirred. The slurry A was evenly applied onto one surface of a current collector aluminum foil with a thickness of 12 $\mu$m and dried at 90°C to obtain a first active layer with a thickness of 50 $\mu$m.

The prepared insulation layer slurry was applied to a region uncoated with the first active layer on the surface of the aluminum foil to obtain an insulation layer with a thickness of 6 $\mu$m. A binder accounted for 15% of total mass of the insulation layer, and inorganic particles accounted for 85% of the total mass of the insulation layer.

Positive-electrode active materials lithium cobalt oxide (LCO), polyvinylidene fluoride (PVDF), conductive carbon black, and carbon nanotubes were mixed at a mass ratio of 97:1.5:0.8:0.7. Then N-methylpyrrolidone (NMP) was added as a solvent, to prepare a slurry B with a solid content of 75%, and the slurry was evenly stirred. The slurry B was evenly applied onto the first active layer and dried at 90°C to obtain a second active layer with a thickness of 50 $\mu$m. The first active layer and the second active layer jointly formed a positive-electrode active material layer of the positive electrode plate. Then the foregoing steps were repeated on another surface of the positive electrode plate to obtain a positive electrode plate coated with positive-electrode active material layers on both sides. The positive electrode plate was cut into a size of 74 mm $\times$ 867 mm, and a tab was welded thereto for later use.

**Comparative Example 1**

This example was the same as Example 2 except that in <preparation of positive electrode plate>, polyvinylidene fluoride (PVDF) was used as a binder, and a weight-average molecular weight of the binder was 700000.

**Comparative Example 2**

This example was the same as Example 2 except that in <preparation of positive electrode plate>, styrene-butadiene rubber was used as a binder, and aluminum oxide was used as inorganic particles.

**Comparative Example 3**

This example was the same as Example 2 except that a weight-average molecular weight of a binder was 50000 in <preparation of binder>.

**Comparative Example 4**

This example was the same as Example 2 except that a weight-average molecular weight of a binder was 3000000 in <preparation of binder>.

**Comparative Example 5**

This example was the same as Example 2 except that acrylonitrile, sodium acrylate, and acrylamide at a mass ratio of 10:75:15 were used as monomers in <preparation of binder>.

**Comparative Example 6**

This example was the same as Example 2 except that acrylonitrile, sodium acrylate, and acrylamide at a mass ratio of 80:5:15 were used as monomers in <preparation of binder>.

**Comparative Example 7**

This example was the same as Example 2 except that in <preparation of positive electrode plate>, $D_v99$ of inorganic particles boehmite was 11 $\mu$m, and a thickness of an insulation layer was 12 $\mu$m.

**Comparative Example 8**

This example was the same as Example 2 except that in <preparation of positive electrode plate>, $D_v99$ of inorganic particles boehmite was 0.007 $\mu$m, and a thickness of an insulation layer was 0.009 $\mu$m.

Preparation parameters and test results of the examples and comparative examples are shown in Table 1 to Table 3.

**Table 1 Preparation parameters and test results of Examples 1 to 24 and Comparative Examples 1 to 6**

| | Inorganic particles | Percentage of inorganic particles (%) | Binder | Percentage of binder (%) | Weight-average molecular weight of binder | Swelling rate of insulation layer (%) | Adhesion between insulation layer and current collector (N/m) | Thickness growth rate of lithium-ion battery (%) | Internal resistance growth rate of lithium-ion battery (%) |
|---|---|---|---|---|---|---|---|---|---|
| Example 1 | Boehmite | 50 | Acrylonitrile (45%) + sodium acrylate (45%) + acrylamide (10%) | 50 | 500000 | 5 | 210 | 5 | 5 |
| Example 2 | Boehmite | 85 | Acrylonitrile (45%) + sodium acrylate (45%) + acrylamide (10%) | 15 | 500000 | 5 | 350 | 5 | 5 |
| Example 3 | Boehmite | 98 | Acrylonitrile (45%) + sodium acrylate (45%) + acrylamide (10%) | 2 | 500000 | 5 | 206 | 5 | 5 |
| Example 4 | Diaspore | 85 | Acrylonitrile (45%) + sodium acrylate (45%) + acrylamide (10%) | 15 | 500000 | 5 | 350 | 5 | 5 |
| Example 5 | Aluminum oxide | 85 | Acrylonitrile (45%) + sodium acrylate (45%) + acrylamide (10%) | 15 | 500000 | 5 | 350 | 5 | 5 |
| Example 6 | Barium sulfate | 85 | Acrylonitrile (45%) + sodium acrylate (45%) + acrylamide (10%) | 15 | 500000 | 5 | 280 | 5 | 5 |
| Example 7 | Boehmite | 85 | Polymethyl acrylate | 15 | 500000 | 8 | 201 | 7 | 5 |

| | Inorganic particles | Percentage of inorganic particles (%) | Binder | Percentage of binder (%) | Weight-average molecular weight of binder | Swelling rate of insulation layer (%) | Adhesion between insulation layer and current collector (N/m) | Thickness growth rate of lithium-ion battery (%) | Internal resistance growth rate of lithium-ion battery (%) |
|---|---|---|---|---|---|---|---|---|---|
| Example 8 | Boehmite | 85 | Acrylonitrile multipolymer | 15 | 500000 | 5 | 220 | 6 | 5 |
| Example 9 | Boehmite | 85 | Sodium carboxymethyl cellulose | 15 | 500000 | 8 | 201 | 8 | 8 |
| Example 10 | Boehmite | 85 | Sodium polyacrylate | 15 | 500000 | 5 | 201 | 5 | 5 |
| Example 11 | Boehmite | 85 | Polyacrylamide | 15 | 500000 | 5 | 220 | 5 | 5 |
| Example 12 | Boehmite | 85 | Acrylamide (40%) + sodium acrylate (60%) | 15 | 500000 | 5 | 280 | 5 | 5 |
| Example 13 | Boehmite | 85 | Acrylonitrile (40%) + acrylamide (60%) | 15 | 500000 | 5 | 250 | 5 | 5 |
| Example 14 | Boehmite | 85 | Acrylonitrile (40%) + sodium acrylate (60%) | 15 | 500000 | 5 | 250 | 5 | 5 |
| Example 15 | Boehmite | 85 | Acrylonitrile (27%) + sodium acrylate (60%) + acrylamide (10%) + acrylic ester (3%) | 15 | 500000 | 5 | 230 | 5 | 5 |
| Example 16 | Boehmite | 85 | Acrylonitrile (30%) + sodium acrylate (60%) + acrylamide (10%) | 15 | 500000 | 5 | 300 | 5 | 5 |

| | Inorganic particles | Percentage of inorganic particles (%) | Binder | Percentage of binder (%) | Weight-average molecular weight of binder | Swelling rate of insulation layer (%) | Adhesion between insulation layer and current collector (N/m) | Thickness growth rate of lithium-ion battery (%) | Internal resistance growth rate of lithium-ion battery (%) |
|---|---|---|---|---|---|---|---|---|---|
| Example 17 | Boehmite | 85 | Acrylonitrile (30%) + sodium acrylate (10%) + acrylamide (60%) | 15 | 500000 | 5 | 300 | 5 | 5 |
| Example 18 | Boehmite | 85 | Acrylonitrile (70%) + sodium acrylate (10%) + acrylamide (20%) | 15 | 500000 | 5 | 300 | 5 | 5 |
| Example 19 | Boehmite | 85 | Acrylonitrile (45%) + sodium acrylate (45%) + acrylamide (10%) | 15 | 100000 | 5 | 206 | 5 | 5 |
| Example 20 | Boehmite | 85 | Acrylonitrile (45%) + sodium acrylate (45%) + acrylamide (10%) | 15 | 1000000 | 5 | 400 | 5 | 5 |
| Example 21 | Boehmite | 85 | Acrylonitrile (45%) + sodium acrylate (45%) + acrylamide (10%) | 15 | 2000000 | 5 | 400 | 5 | 5 |
| Example 22 | Boehmite | 50 | Acrylamide (40%) + sodium acrylate (60%) | 50 | 500000 | 5 | 201 | 5 | 5 |
| Example 23 | Boehmite | 98 | Acrylamide (40%) + sodium acrylate (60%) | 2 | 500000 | 5 | 201 | 5 | 5 |
| Example 24 | Boehmite | 85 | Acrylamide (40%) + sodium acrylate (60%) | 15 | 100000 | 5 | 201 | 5 | 5 |

| | Inorganic particles | Percentage of inorganic particles (%) | Binder | Percentage of binder (%) | Weight-average molecular weight of binder | Swelling rate of insulation layer (%) | Adhesion between insulation layer and current collector (N/m) | Thickness growth rate of lithium-ion battery (%) | Internal resistance growth rate of lithium-ion battery (%) |
|---|---|---|---|---|---|---|---|---|---|
| Comparative Example 1 | Boehmite | 85 | PVDF | 15 | 700000 | 10 | 80 | 15 | 10 |
| Comparative Example 2 | Aluminum oxide | 85 | Styrene-butadiene rubber | 15 | 500000 | 10 | 30 | 10 | 9 |
| Comparative Example 3 | Boehmite | 85 | Acrylonitrile (45%) + sodium acrylate (45%) + acrylamide (10%) | 15 | 50000 | 9 | 160 | 10 | 9 |
| Comparative Example 4 | Boehmite | 85 | Acrylonitrile (45%) + sodium acrylate (45%) + acrylamide (10%) | 15 | 3000000 | 10 | 170 | 12 | 10 |
| Comparative Example 5 | Boehmite | 85 | Acrylonitrile (10%) + sodium acrylate (75%) + acrylamide (15%) | 15 | 500000 | 10 | 165 | 11 | 9 |
| Comparative Example 6 | Boehmite | 85 | Acrylonitrile (80%) + sodium acrylate (5%) + acrylamide (15%) | 15 | 500000 | 9 | 155 | 12 | 11 |

16

**Table 2 Preparation parameters and test results of Examples 25 to 30 and Comparative Examples 7 and 8**

| | $D_v99$ of inorganic particles (μm) | Thickness of insulation layer (μm) | Swelling rate of insulation layer (%) | Adhesion between insulation layer and current collector (N/m) | Thickness growth rate of lithium-ion battery (%) | Internal resistance growth rate of lithium-ion battery (%) |
|---|---|---|---|---|---|---|
| Example 25 | 0.01 | 0.02 | 5 | 350 | 5 | 5 |
| Example 26 | 1.0 | 1.0 | 5 | 350 | 5 | 5 |
| Example 27 | 3.0 | 3.5 | 5 | 350 | 5 | 5 |
| Example 28 | 5.0 | 6.0 | 5 | 350 | 5 | 5 |
| Example 29 | 7.0 | 8.0 | 5 | 350 | 5 | 5 |
| Example 30 | 9.9 | 10.0 | 5 | 350 | 5 | 5 |
| Comparative Example 7 | 11 | 12 | 5 | 180 | 7 | 7 |
| Comparative Example 8 | 0.007 | 0.009 | 5 | 150 | 8 | 8 |

**Table 3 Preparation parameters and test results of Examples 31 to 33**

| | Inorganic particles | Percentage of inorganic particles (%) | Binder | Percentage of binder (%) | Weight-average molecular weight of binder | Swelling rate of insulation layer (%) | Adhesion between insulation layer and current collector in positive electrode plate (N/m) | Adhesion between insulation layer and current collector in negative electrode plate (N/m) | Thickness growth rate of lithium-ion battery (%) | Internal resistance growth rate of lithium-ion battery (%) |
|---|---|---|---|---|---|---|---|---|---|---|
| Example 31 | Boehmite | 85 | Acrylonitrile (45%) + sodium acrylate (45%) + acrylamide (10%) | 15 | 500000 | 5 | - | 340 | 5 | 5 |
| Example 32 | Boehmite | 85 | Acrylonitrile (45%) + sodium acrylate (45%) + acrylamide (10%) | 15 | 500000 | 5 | 350 | 340 | 5 | 5 |
| Example 33 | Boehmite | 85 | Acrylonitrile (45%) + sodium acrylate (45%) + acrylamide (10%) | 15 | 500000 | 5 | 350 | - | 5 | 5 |

It can be learned from Examples 1 to 33 and Comparative Examples 1 to 8 that, in the lithium-ion battery with the insulation layer in this application, the adhesion between the insulation layer and the current collector is significantly improved. Especially in Examples 20 and 21, the adhesion between the insulation layer and the current collector reaches 400 N/m.

It can be further learned from Examples 1 to 33 and Comparative Examples 1 to 8 that, in the lithium-ion battery with the insulation layer in this application, the thickness growth rate of the lithium-ion battery and the internal resistance growth rate of the lithium-ion battery are significantly reduced.

It can be learned from Examples 1, 3, and 19 and Comparative Examples 22 to 24 that, when the percentage of the binder, the weight-average molecular weight of the binder, the inorganic particles, and the percentage of the inorganic particles are the same, the binder formed by polymerization of the three monomers acrylonitrile, sodium acrylate, and acrylamide has a higher viscosity than a binder formed by polymerization of two of the monomers.

$D_v99$ of the inorganic particles and the thickness of the insulation layer usually affect the adhesion between the insulation layer and the current collector. It can be learned from Examples 25 to 30 and Comparative Examples 7 and 8 that, provided that the $D_v99$ of the inorganic particles and the thickness of the insulation layer are within the ranges in this application, the adhesion between the insulation layer and the current collector can be improved, and the thickness growth rate of the lithium-ion battery and the internal resistance growth rate of the lithium-ion battery can be reduced.

It can be learned from Examples 31 to 33 that the thickness growth rate of the lithium-ion battery and the internal resistance growth rate of the lithium-ion battery can be reduced when the positive electrode plate and/or the negative electrode plate of the lithium-ion battery include the insulation layer in this application.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. An electrochemical apparatus, comprising an electrode, wherein the electrode comprises a current collector, the current collector comprises a coated region provided with an active material and an uncoated region provided with no active material, the uncoated region is at least partially provided with an insulation layer, the insulation layer comprises a binder and inorganic particles, and a swelling rate of the insulation layer is not higher than 8% after the insulation layer is immersed in an electrolyte at 85°C for 24h.

2. The electrochemical apparatus according to claim 1, wherein the binder comprises at least one of polypropylene, polyacrylate, acrylonitrile multipolymer, or carboxymethyl cellulose salt.

3. The electrochemical apparatus according to claim 1, wherein the binder comprises a polymer obtained by polymerization of at least one of monomer acrylonitrile, acrylate, acrylamide, or acrylic ester.

4. The electrochemical apparatus according to claim 3, wherein based on total mass of the polymer, a mass percentage of the acrylonitrile is 25% to 70%, a mass percentage of the acrylate is 10% to 60%, a mass percentage of the acrylamide is 10% to 60%, and a mass percentage of the acrylic ester is 0% to 10%.

5. The electrochemical apparatus according to claim 1, wherein a swelling rate of the binder in the electrolyte is 0% to 5%.

6. The electrochemical apparatus according to claim 1, wherein a weight-average molecular weight of the binder is 100000 to 2000000.

7. The electrochemical apparatus according to claim 1, wherein based on total mass of the insulation layer, a mass percentage of the binder is 2% to 50%, and a mass percentage of the inorganic particles is 50% to 98%.

8. The electrochemical apparatus according to claim 1, wherein a cover rate of the insulation layer is not less than 95%.

9. The electrochemical apparatus according to claim 1, wherein the inorganic particles comprise at least one of boehmite, diaspore, aluminum oxide, barium sulfate, calcium sulfate, or calcium silicate.

10. The electrochemical apparatus according to claim 1, wherein $D_v99$ of the inorganic particles is 0.01 $\mu$m to 9.9 $\mu$m.

11. The electrochemical apparatus according to claim 1, wherein a thickness of the insulation layer is 0.02 $\mu$m to 10 $\mu$m.

12. The electrochemical apparatus according to claim 1, wherein adhesion between the insulation layer and the current collector is not less than 201 N/m.

13. The electrochemical apparatus according to claim 1, wherein compared with an electrochemical apparatus of the same specifications without the insulation layer and stored at 85°C for 24h or 60°C for 30 days, the electrochemical apparatus stored at 85°C for 24h or 60°C for 30 days satisfies at least one of the following characteristics:

    (a) a difference between thickness growth rates of the electrochemical apparatuses being within ±8%; or
    (b) a difference between internal resistance growth rates of the electrochemical apparatuses being within ±8%.

14. An electronic apparatus, comprising the electrochemical apparatus according to any one of claims 1 to 13.

FIG. 1

Starting end

2

1

Terminating    2
end

FIG. 2a

Starting end

2

1

Terminating    3
end

FIG. 2b

Starting end

3

1

Terminating    2
end

FIG. 2c

Starting end

Length direction

1

2

3

Terminating end

FIG. 3

Stable range

Average value of adhesion: 440 N/m

Standard deviation/Average value: 8%

Stroke (mm)

FIG. 4

<div align="center">

**INTERNATIONAL SEARCH REPORT**

</div>

| International application No. |
|---|
| **PCT/CN2020/132347** |

**A.    CLASSIFICATION OF SUBJECT MATTER**

H01M 4/13(2010.01)i;  H01M 4/62(2006.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI: 电化学装置, 电池, 未涂覆区, 绝缘层, 粘结剂, 无机颗粒, 膨胀率, 重均分子量, Mw, 丙烯腈, 丙烯酰胺, 丙烯酸盐, 聚合electrochemical device, battery, uncoated area, insulating layer, binder, inorganic particle, expansion rate, mass average molecular mass, acrylonitrile, acrylamide, acrylate, polymerize

**C.    DOCUMENTS CONSIDERED TO BE RELEVANT**

| Category* | Citation of document, with indication, where appropriate, of the relevant passages | Relevant to claim No. |
|---|---|---|
| X | CN 1728439 A (MATSUSHITA ELECTRIC INDUSTRY CO., LTD.) 01 February 2006 (2006-02-01)<br>  description page 5 paragraph 2 from the bottom - page 23 paragraph 3, figure 2 | 1-3, 5, 7-14 |
| Y | CN 1728439 A (MATSUSHITA ELECTRIC INDUSTRY CO., LTD.) 01 February 2006 (2006-02-01)<br>  description page 5 paragraph 2 from the bottom - page 23 paragraph 3, figure 2 | 4, 6 |
| Y | CN 111139002 A (XUANCHENG YANYI NEW ENERGY TECHNOLOGY CO., LTD.) 12 May 2020 (2020-05-12)<br>  description, paragraphs 49-137 | 4 |
| Y | JP 2020047506 A (TOYOTA MOTOR CORP.) 26 March 2020 (2020-03-26)<br>  description, paragraphs 10-55, and figures 1-7 | 6 |
| Y | CN 106220779 A (SICHUAN YINDILE TECHNOLOGY CO., LTD.) 14 December 2016 (2016-12-14)<br>  description, paragraphs 33-60 | 4 |
| Y | CN 104904053 A (LG CHEMICAL LTD.) 09 September 2015 (2015-09-09)<br>  description, paragraphs 21-68, and figures 1-4 | 6 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 August 2021** | **25 August 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/132347**

**C.     DOCUMENTS CONSIDERED TO BE RELEVANT**

| Category* | Citation of document, with indication, where appropriate, of the relevant passages | Relevant to claim No. |
|---|---|---|
| A | JP 2017157471 A (GS YUASA CORP.) 07 September 2017 (2017-09-07)<br>entire document | 1-14 |

Form PCT/ISA/210 (second sheet) (January 2015)

<table>
<tr><td colspan="2">INTERNATIONAL SEARCH REPORT<br>Information on patent family members</td><td colspan="2">International application No.<br>PCT/CN2020/132347</td></tr>
</table>

| Patent document cited in search report | | | Publication date (day/month/year) | Patent family member(s) | | | Publication date (day/month/year) |
|---|---|---|---|---|---|---|---|
| CN | 1728439 | A | 01 February 2006 | CN | 100367559 | C | 06 February 2008 |
| | | | | JP | 2006120604 | A | 11 May 2006 |
| | | | | JP | 5289394 | B2 | 11 September 2013 |
| | | | | JP | 2010267632 | A | 25 November 2010 |
| | | | | JP | 4859399 | B2 | 25 January 2012 |
| | | | | US | 2006051663 | A1 | 09 March 2006 |
| | | | | US | 7638230 | B2 | 29 December 2009 |
| | | | | KR | 20060050988 | A | 19 May 2006 |
| | | | | KR | 100701758 | B1 | 29 March 2007 |
| CN | 111139002 | A | 12 May 2020 | None | | | |
| JP | 2020047506 | A | 26 March 2020 | None | | | |
| CN | 106220779 | A | 14 December 2016 | JP | 2019526693 | A | 19 September 2019 |
| | | | | CN | 106220779 | B | 31 August 2018 |
| | | | | TW | 201809040 | A | 16 March 2018 |
| | | | | WO | 2018032665 | A1 | 22 February 2018 |
| | | | | JP | 6758505 | B2 | 23 September 2020 |
| | | | | KR | 102235389 | B1 | 02 April 2021 |
| | | | | EP | 3502151 | A1 | 26 June 2019 |
| | | | | TW | I608023 | B | 11 December 2017 |
| | | | | KR | 20190039993 | A | 16 April 2019 |
| CN | 104904053 | A | 09 September 2015 | WO | 2015080305 | A1 | 04 June 2015 |
| | | | | EP | 2899791 | B1 | 01 August 2018 |
| | | | | JP | 2016509338 | A | 24 March 2016 |
| | | | | CN | 104904053 | B | 24 October 2017 |
| | | | | US | 9350006 | B2 | 24 May 2016 |
| | | | | US | 2015147629 | A1 | 28 May 2015 |
| | | | | EP | 2899791 | A1 | 29 July 2015 |
| | | | | JP | 2017135110 | A | 03 August 2017 |
| | | | | JP | 6587157 | B2 | 09 October 2019 |
| | | | | IN | 201403404 | P1 | 31 August 2016 |
| JP | 2017157471 | A | 07 September 2017 | None | | | |

Form PCT/ISA/210 (patent family annex) (January 2015)